# EUROPÄISCHE PATENTANMELDUNG

(11) **EP 4 432 089 A1**
(43) Veröffentlichungstag der Anmeldung: **18.09.2024**
(21) Anmeldenummer: 23167767.5
(22) Anmeldetag: 13.04.2023
(51) Int. Cl.: G06F 9/54, G06N 3/045

(54) **COMPUTER-IMPLEMENTIERTES VERFAHREN UND SYSTEM ZUR AUTOMATISIERTEN VERARBEITUNG VON AUFGABEN AUF BASIS KÜNSTLICHER INTELLIGENZ AN EINER EDGE-VORRICHTUNG**

(30) Priorität: 13.03.2023 EP 23161485
(71) Anmelder: Siemens Aktiengesellschaft, 80333 München (DE)
(72) Erfinder: HIESSL, Thomas, 1050 Wien (AT); REZAPOUR LAKANI, Safoura, 1210 Wien (AT); EDER, Jana, 1180 Wien (AT); SCHALL, Daniel, 2020 Hollabrunn (AT)
(74) Vertreter: Siemens Patent Attorneys

(57) **Zusammenfassung**

Computer-implementiertes Verfahren zur automatisierten Verarbeitung von Verarbeitungs-Aufgaben auf Basis künstlicher Intelligenz oder maschinellem Lernen an einer Edge-Vorrichtung, welche mit einer Rechenvorrichtung verbunden ist, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
c) Erzeugen von jeweiligen Verarbeitungs-Vorlagen für eine jeweiligen Verarbeitungs-Aufgabe, umfassend jeweilige Verarbeitungs-Daten und dem jeweiligen, zumindest einem Verarbeitungs-Parameter, durch die Rechenvorrichtung,
d) Bereitstellen der Verarbeitungs-Vorlagen an die Edge-Vorrichtung, durch die Rechenvorrichtung,
e) Ausführen der Verarbeitungs-Vorlagen mithilfe der jeweiligen Verarbeitungs-Parameter durch die Edge-Vorrichtung, und Erhalten von Verarbeitungs-Ergebnissen aus den Verarbeitungs-Vorlagen,
f) Ansteuern zumindest einer technischen Vorrichtung, welche mit der Edge-Vorrichtung verbundenen ist, mit den Verarbeitungs-Ergebnissen, durch die Edge-Vorrichtung.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zur automatisierten Verarbeitung von Verarbeitungs-Aufgaben auf Basis künstlicher Intelligenz oder maschinellem Lernen an einer Edge-Vorrichtung, welche mit einer Rechenvorrichtung verbunden ist.

Die Erfindung betrifft ferner ein Computer-Programm-Produkt und eine computer-implementierte Datenstruktur.

Edge-Geräte werden häufig in einem Fertigungskontext verwendet um Daten zu sammeln und Datenanalyse- und "Machine Learning" (maschinelles Lernen, kurz "ML", )-Aufgaben oder "Artificial Intelligence" (kurz "AI" oder deutsch "künstliche Intelligenz, kurz "KI") Aufgaben auszuführen.

Für eine rasche und effiziente Abarbeitung werden Vorlagen, sogenannte "Templates", verwendet, häufig in Form von Python Programmcodes, in welchen eine vollständige KI-/ML-Pipeline sowohl für Trainings-Aufgaben als auch für Prognose-Aufgaben abgebildet ist. Dabei ist der gesamte Programmcode enthalten, welcher zum Training eines KI-/ML-Modells benötigt wird, ferner umfassend das Laden und Vorverarbeiten (engl. "preprocessing") der Daten und jener Programmcode, welcher zur Ausführung der Prädiktion benötigt wird.

Im Stand der Technik bereitet ein Daten-Wissenschaftler ein Template vor, indem beispielsweise ein vollständiges Jupyter Notebook, ein sehr populäres Entwicklungswerkzeug für Datenwissenschaftler) entwickelt wird. Das Template wird mithilfe des "template builders" kompiliert und durch ein "VQI backend" veröffentlicht, wodurch das Template beispielsweise automatisch in eine "Visual Quality Inspection" (kurz "VQI") Anwendung integriert wird und einem Domänen Experten bereitgestellt wird.

Der Domänen Experte ist jene Person, die die Anwendung benützt und für die Bereitstellung der Trainingsdaten verantwortlich ist. Der Domänen Experte ist ferner dafür zuständig, das Training eines Datensatz mit einem Template anzustoßen.

Ein Automatisierungsingenieur verteilt das nun trainierte Modell zu der Edge-Vorrichtung.

Es kann häufig der Fall sein, dass die Rolle des Domänen Experten und die des Automatisierungsingenieurs durch dieselbe Person ausgeübt werden.

Durch die manuelle Ausübung dieser Rollen kann es jedoch zu monotonen und zeitintensiven Tätigkeiten kommen, was zu unerwünschten Fehlern führen kann, welche möglicherweise erst nach einem Ressourcen-intensiven Training bemerkt werden und daher zu hohen Folgeaufwänden führen können.

Ferner kann es bei der manuellen Ausübung dieser Rollen dazu kommen, dass mehrere ML-Aufgaben untereinander unkoordiniert an Hardware-Ressourcen zur Bearbeitung übergeben werden und die Hardware die Aufgaben zeitlich nicht optimal abarbeitet.

Sogenannte "Workloads" sind Rechenprozesse, welche eine Aufgabe auszuführen. Workloads können unterschiedlich groß sein und unterschiedlichen Zwecken dienen.

Workloads können kleinere Prozesse sein, oder auch größere Batch-Prozesse, wie das Trainieren eines KI-Modells.

Systeme nach dem Stand der Technik können grob kategorisiert werden in statische und dynamische Workloads.

Statische Workloads bleiben über einen langen Zeitraum relativ konstant und verwenden sehr ähnliche Mengen an Rechenressourcen nach einem festen Zeitplan. Die Hardware an einer Edge kann entsprechend der zu erwartenden statischen Auslastung ausgewählt werden. Es ist nicht erforderlich, das System während der Laufzeit neu zu konfigurieren.

Dynamische Workloads jedoch passen sich jedoch dramatisch an, wenn die Anforderungen steigen. Sie werden auch als temporäre Workloads bezeichnet. Ein dynamischer Workload erfordert mehr Flexibilität und Verfügbarkeit, um effizient ausgeführt zu werden. Ein Beispiel für einen dynamischen Workload ist das Re-Training eines KI-Modells an einer Edge. Möglicherweise sind neue Daten verfügbar, die eine Aktualisierung des Modells erfordern. Diese Aufgaben sind beim Entwurf eines Systems schwer oder gar nicht planbar. Der Benutzer möchte möglicherweise auch mehr Flexibilität haben, um bestimmte Workloads von der Cloud an den Edge zu verschieben.

Derzeit verfügbare Edge-Systeme können dynamische Workloads in Edge- oder Operational Technology"- (kurz "OT") Umgebungen nicht ausreichend verarbeiten. Mit der Verbreitung von KI und ML an einer Edge in großen Umgebungen wird es jedoch unerlässlich sein, solche Workloads effizienter zu handhaben.

In Bereich von Anwendungen auf Basis von industriellem föderiertem Lernen (kurz "IFL" oder nur "FL") gibt es im Stand der Technik immer noch viele Herausforderungen, FL-Dienste in großem Maßstab bereitzustellen und Anwendungen zu integrieren, die industrielle Anwendungsfälle wie eine Betriebsstands-Überwachung (engl. "condition monitoring", kurz "CM") von technischen Geräten (engl. "assets") erfolgreich lösen.

Dabei sollen aus FL resultierende Modelle bevorzugt viele Kunden bedienen. Daher ist ein skalierbarer Einsatz von FLbetriebenen Anwendungen beabsichtigt.

Allerdings arbeiten nicht alle Klienten im gleichen Kontext. Beispielsweise können Datenstruktur, Datenqualität und Anforderungen an die Integration der Modelle in Anwendungen und Diensten unterschiedlich sein.

Daher besteht Anpassungsbedarf noch bevor das Modell trainiert wird, wie beispielsweise eine kundenspezifische Vorverarbeitung, um die Eingabedaten mit dem globalen Modell in Einklang zu bringen.

Ferner ist im Stand der Technik zu beachten, dass die Entwicklung und Bereitstellung skalierbarer und dennoch anpassbarer IFL-basierter Lösungen ein mehrstufiger Prozess sind, an dem mehrere Professionen wie Datenwissenschaftler, IT-Experten und Betreiber beteiligt sind.

Sogenannte "ModelOps"-Ansätze unterstützen die Operationalisierung von Modellen, indem sie einen Lebenszyklus mit automatisierten Pipelines ausführen, die beispielweise Datenverarbeitung, (Re-)Training, Validierung und Bereitstellung abdecken. Damit können von der Modellentwicklung bis zum Modellbetrieb in der Produktion mehrere Schritte in der Wertschöpfung berücksichtigt werden.

Um diese Ansätze auch für föderiertes Lernen bereitzustellen, müssen auch die Klienten auf der Edge-Schicht in den Lebenszyklus einbezogen werden.

Dabei ist es im Stand der Technik jedoch nicht vorgesehen, die Verwaltung des Lebenszyklus eines FL-Modells so zu berücksichtigen, dass eine kundenspezifische Anpassung und Anpassung an den lokalen Kontext erfolgt.

Außerdem werden FL-Aufgaben im Stand der Technik meist zentral definiert, um ein globales Modell zu berechnen, und berücksichtigen jedoch nicht kundenspezifische Konfigurationen und den Kontext, wie eine lokale Datenqualität, eine Datenstruktur, oder Hyperparameter, welche in lokalen Trainings verwendet werden, oder individuelle Kundenkriterien für die Zusammenarbeit mit anderen Kunden, wie eine erforderliche Mindestanzahl kollaborierender Kunden, sowie unterschiedliche Rechenressourcen.

Ferner können FL-Systeme aus dem Stand der Technik FL-Aufgaben nicht einfach mit mehreren Stufen verketten.

In aktuellen FL-Systemen steht das Modelltraining im Vordergrund, das zentral definiert und dezentral auf jedem Client durchgeführt werden muss. Die Vor- und Nachbearbeitung der lokalen Daten und Vorhersageergebnisse gilt jedoch nicht als an lokale Clientanwendungen angepasst.

Es ist daher Aufgabe der Erfindung ein Verfahren bereitzustellen, mit welchem der Automatisierungsgrad bei der Ausführung von KI-/ML-Processing-Pipelines verbessert werden kann, Fehler durch die menschliche Verarbeitung verringert oder gar vermieden werden, sowie die dynamische Effizienz bei der Abarbeitung verbessert werden kann.

Es ist Aufgabe der Erfindung eine Lösung für Anwendungen auf Basis föderierten Lernens bereitzustellen, bei welchen eine skalierbare und zugleich eine Anwendung von flexiblen Modellen erfolgen kann.

Unter einem flexiblen Modell wird in vorliegenden Zusammenhang ein individuell, an eine, auf eine jeweilige Lösung angepasstes FL-Modell verstanden.

Die Aufgabe der Erfindung wird durch ein Verfahren eingangs genannter Art gelöst, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
c) Erzeugen von jeweiligen Verarbeitungs-Vorlagen für eine jeweilige Verarbeitungs-Aufgabe, umfassend jeweilige Verarbeitungs-Daten und dem jeweiligen, zumindest einem Verarbeitungs-Parameter, durch die Rechenvorrichtung,
d) Bereitstellen der Verarbeitungs-Vorlagen an die Edge-Vorrichtung, durch die Rechenvorrichtung,
e) Ausführen der Verarbeitungs-Vorlagen mithilfe der jeweiligen Verarbeitungs-Parameter durch die Edge-Vorrichtung, und Erhalten von Verarbeitungs-Ergebnissen aus den Verarbeitungs-Vorlagen,
f) Ansteuern zumindest einer technischen Vorrichtung, welche mit der Edge-Vorrichtung verbundenen ist, mit den Verarbeitungs-Ergebnissen, durch die Edge-Vorrichtung.

In dieser ersten Lösung wird eine technische Vorrichtung an einer Edge-Vorrichtung mit erfindungsgemäß verarbeiteten Daten angesteuert.

Unter Verarbeitungs-Daten werden im vorliegenden Zusammenhang jene Daten verstanden, welche dazu nötig sind, eine Verarbeitungs-Aufgabe zu erledigen. Dies sind beispielsweise Programmcodes für die KI-/ML-Aufgabe, welche eine Verarbeitungs-Aufgabe beschreibt, ein oder mehrere KI-/ML-Modelle, welche beispielsweise eine technische Vorrichtung oder eine Sensor-Vorrichtung beschreibt, sowie dazugehörige Trainingsdaten und/oder Testdaten.

Unter Ausführungs-Parametern werden im vorliegenden Zusammenhang jene Parameter verstanden, welche die Ausführung der Verarbeitungs-Aufgaben beziehungsweise der Verarbeitungs-Daten an der Edge-Vorrichtung beschreiben, spezifizieren oder vorgeben, beispielsweise indem Grenzwerte oder Betriebswerte für eine verbundene technische Vorrichtung oder Sensor-Vorrichtung definiert werden, oder auch, um beispielsweise eine gemeinsame Verarbeitung eine Menge an Verarbeitungs-Aufgaben an der Edge-Vorrichtung zu beschreiben, wie durch Anwendung von Prioritäten bei der Verarbeitung, oder die Nutzung spezieller Ressourcen an der Edge-Vorrichtung.

Die technische Vorrichtung kann beispielsweise eine CNC-Fräsmaschine, eine Pumpe oder dergleichen sein. Die Ansteuerung erfolgt unter Verwendung eines Modells auf Basis künstlicher Intelligenz oder maschinellem Lernen.

Eine Verarbeitungs-Aufgabe kann beispielsweise eine Durchführung einer Fräsoperation durch eine CNC-Fräsmaschine sein, wobei durch Anwendung eine KI-/ML-Modells um eine effiziente Erledigung der Verarbeitungs-Aufgabe ermöglicht wird.

Eine Verarbeitungs-Aufgabe kann beispielsweise auch der vorausschauende Betrieb einer Pumpe mit dem Ziel einer Optimierung von Wartungsintervallen durch Anwendung eines KI-/ML-Modells sein.

Prognostizierte oder durch Anwendung des Modells optimierte Steuerbefehle für die technische Vorrichtung werden als Verarbeitungs-Ergebnisse erzeugt und erhalten, und weiter angewendet.

Die KI-Codes können dabei ML/KI-Modelle, Trainings-Daten oder Analyse-Daten, welche auf ein trainiertes Modell beispielweise zur Prädiktion angewendet werden, oder Daten zum maschinellen Lernen wie in föderierten Systemen, umfassen.

Die Anwendung von Programmcodes für maschinelles Lernen oder für künstliche Intelligenz wird im vorliegenden Zusammenhang als äquivalent angesehen.

Durch das Verfahren wird erreicht, dass eine kompakte Datenstruktur durch eine Verarbeitungs-Vorlage gebildet wird, welche es einer dafür angepassten Verarbeitungs-Ausführungseinheit an der Edge-Vorrichtung auf einfache und effiziente Weise erlaubt, mehrerer Verarbeitungs-Vorlagen auszuführen und KI-Berechnungen durchzuführen, welche auf die Umgebungsbedingungen an der Edge-Vorrichtung angepasst sind.

Verarbeitungsfehler durch falsche Benutzereingaben können reduziert werden, da die Anpassung einer Verarbeitung an die Edge-Vorrichtung automatisiert erfolgen kann.

Durch das Verfahren wird eine sehr einfach implementierbare Definition von Prozess-Pipelines erreicht, welche technische Eigenschaften von Edge-Vorrichtungen berücksichtigt.

Es können sowohl KI-/ML-Trainings-Aufgaben, als auch ML-/KI-Inferenz-Aufgaben effizient abgearbeitet werden.

Es können durch das Verfahren betriebsspezifische Parameter und entsprechende Beschränkungen einer Edge-Vorrichtung berücksichtigt werden, indem Meta-Informationen mit Funktionen maschinellen Lernens oder künstlicher Intelligenz innerhalb einer Verarbeitungs-Vorlage verknüpft werden, wie Pre-Processing und Post-Processing, Training und Prädiktion.

Durch eine derartige Verarbeitung an einer Edge-Vorrichtung können dazu nicht-lineare Optimierungs-Verfahren eingesetzt werden, um die Edge-Vorrichtung hinsichtlich ihrer Ressourcen optimal zu betreiben.

Ferner können Verarbeitungs-Aufgaben Konfigurationsspezifisch erledigt werden, indem Konfigurations-Angaben oder Angaben zur Daten-Aggregation in Verarbeitungs-Vorlagen entsprechend berücksichtigt werden.

Es kann ein Modell für die Vorhersage verwendet werden, und es kann ferner eine kundenspezifische Nachbearbeitung angewandt werden, noch bevor die Ausgabe an Anwendungen bereitgestellt wird.

Durch die Kombination skalierbarer Bereitstellungen mit der genannten Anpassung können mehrere Kunden mit einer bestimmten KI-Lösung bedient und dennoch lokale Klienten-Kontexte berücksichtigt werden, wobei ferner Prozesse-Eigenschaften und Prozess-Parameter berücksichtigt werden können.

Mit anderen Worten kann ein End-to-End-Lifecycle-Managements von Softwareartefakten, die zu diesem Zweck kontextsensitive Verarbeitungsschritte des Kunden umfassen, adressiert werden.

In weiterer Folge kann ein kundenspezifisches und erweiterbares "federated learning as a service", kurz "FLaaS", ermöglicht werden, welches in Edge-basierte Client-Anwendungen integriert werden kann.

Ferner können verkettete FL-Aufgaben auf einfache Weise definiert werden, indem föderiertes Clustering auf "unlabeled" Daten, föderiertes Lernen und föderierte Klassifizierung mithilfe von "self-labeled", "self-supervised" Ausgaben sowie föderierte Validierung angewandt werden kann, wie durch aggregierte Performance-Metriken.

Die beschriebene Lösung stellt für die genannten Nachteile im Stand der Technik eine entsprechende Lösung bereit.

Die Aufgabe der Erfindung wird auch durch ein Verfahren eingangs genannter Art gelöst, wobei folgende Schritte verarbeitet werden:
a) Erfassen von Sensordaten durch eine Sensor-Vorrichtung, welche mit der Edge-Vorrichtung verbundenen ist, und Bereitstellen der Sensordaten an die Rechenvorrichtung,
b) Bereitstellen einer Menge von Verarbeitungs-Aufgaben in Form Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung,
e) Bereitstellen der Verarbeitungs-Vorlagen an die Edge-Vorrichtung, durch die Rechenvorrichtung,
f) Ausführen der Verarbeitungs-Vorlagen mithilfe der jeweiligen Verarbeitungs-Parameter durch die Edge-Vorrichtung, und Erhalten von Verarbeitungs-Ergebnissen für die Sensordaten aus den Verarbeitungs-Vorlagen.

In dieser zweiten, alternativen Lösung werden Sensordaten von einer Sensor-Vorrichtung an einer Edge-Vorrichtung erfindungsgemäß verarbeitet.

Die Sensor-Vorrichtung kann beispielsweise ein optischer Sensor, ein Video-Sensor eines Systems zu "Visual Quality Inspection" von erzeugten Produkten auf einem Förderband eines Produktionssystems, ein Temperatur-Sensor eines Fräskopfes einer CNC-Fräsmaschine, ein Drehzahl-Sensor einer Pumpe oder dergleichen sein, wobei die Sensor-Vorrichtung beispielsweise Eigenschaften von erzeugten oder bearbeiteten Produkten als Sensordaten erfasst.

Inferenzen in den Sensordaten können durch Anwendung eines KI-/ML-Modells der entsprechenden Verarbeitungs-Aufgabe erkannt werden.

Beide Lösungen dienen derselben erfindungsgemäßen, technischen Aufgabe, nämlich die effiziente Verarbeitung von Verarbeitungs-Aufgaben an einer Edge-Vorrichtung durch Anwendung von Verarbeitungs-Vorlagen. Dementsprechend gelten dieselben Vorzüge des Verfahrens.

In einer Weiterbildung der Erfindung ist es vorgesehen, dass die Rechenvorrichtung (CPU) an einer Edge-Vorrichtung eines Klienten eines Klienten-Server-Systems gelegen ist.

Dadurch kann eine effiziente Berechnung erfolgen.

In einer Weiterbildung der Erfindung ist es vorgesehen, dass die Verarbeitungs-Vorlagen mithilfe eines Message Queuing Telemetry Transport Protokolls vom Server an Klienten übertragen werden.

Dadurch kann eine effiziente Verteilung der Vorlagen erfolgen.

In einer Weiterbildung der Erfindung ist es vorgesehen, dass der zumindest eine Verarbeitungs-Parameter durch eine Funktions-Dekorierung als Python-Design-Muster gebildet ist.

Dadurch kann auf einfache Weise eine Implementierung erreicht werden, welche von Python durch sogenannte "Dekoratoren" unterstützt wird.

In einer Weiterbildung der Erfindung ist es vorgesehen, dass der zumindest eine Verarbeitungs-Parameter zumindest eine Information hinsichtlich einer Datenstruktur bei der Erzeugung des Modells und/oder einer Datenqualität bei der Erzeugung des Modells und/oder einer Anforderung an die Integration eines oder mehrerer Modelle in eine Anwendung und einen Dienst umfasst.

Zur Beschreibung der Datenstruktur kann beispielsweise eine Beschreibung des in der Zielanwendung bereits benutzten Modells dienen, wie durch entsprechende Meta-Daten für ein Modell, dazugehörige Eingangs-Parameter und/oder die Form der Trainingsdaten.

Folgende Metriken können beispielsweise zur Bestimmung der Datenqualität herangezogen werden, für welche ein derart bestimmter Qualitäts-Parameter im weiteren Verfahren verwendet wird:
- Normierung der Metrik-Ergebnisse: Dadurch lassen sich Daten interpretieren und miteinander vergleichen.
- Kardinale Skalierung: Dies ermöglicht es, die Entwicklungskurve der Metrik-Ergebnisse nachzuverfolgen und geeignete wirtschaftliche Maßnahmen abzuleiten.
- Sensibilisierbarkeit: Die Datenqualität wird dadurch für eine bestimmte Anwendung und Zielsetzung mess- und bewertbar.
- Aggregierbarkeit: Dies schafft die Möglichkeit der Messung der Datenqualität auf Attributwert-, Tupel-, Relationen- sowie Datenbankebene. So werden die Metrik-Ergebnisse auf allen Ebenen aggregierbar.
- Operationalisierbarkeit mittels Messverfahren: Messverfahren wie Definitions- oder Wertebereich machen Metriken in der Praxis anwendbar.
- Fachliche Interpretierbarkeit: Metrik-Ergebnisse sollten durch Dritte nachzuvollziehen sein. Dies ermöglicht eine fachliche Interpretation und Reproduktion.

Zur Beschreibung der Integration eines oder mehrerer Modelle in eine Anwendung und einen Dienst kann beispielsweise ein Laufzeitparameter dienen, welches Informationen über die Ausführung der Anwendung oder des Dienstes aufweist, wie Information über die Ausführung als Hintergrundprozess oder Zugriffsrechte zu besonderen Datensätzen während der Ausführung.

Dadurch kann erreicht werden, dass die Integration der Modelle in Anwendungen verbessert wird.

In einer Weiterbildung der Erfindung ist es vorgesehen, dass der zumindest eine Verarbeitungs-Parameter zumindest eine Information hinsichtlich dem Training und/oder der Validierung des Modells und/oder der Bereitstellung des Modells an eine Anwendung oder einen Dienst umfasst.

Dadurch kann erreicht werden, dass die Verwendung von Modellen in Anwendungen verbessert wird.

In einer Weiterbildung der Erfindung ist es vorgesehen, dass der zumindest eine Verarbeitungs-Parameter eine zeitliche Information umfasst, beispielsweise eine Verarbeitungs-Priorität, eine vorbestimmte Start-Zeit oder End-Zeit für die Verarbeitung, ein Verarbeitungs-Zeitbereich oder eine Verarbeitungs-Wiederholung.

Dadurch wird erreicht, dass die zeitliche Ausführung der Verarbeitung an der Edge-Vorrichtung vorteilhaft angepasst werden kann und die Edge-Vorrichtung insgesamt effizienter arbeiten kann.

In einer Weiterbildung der Erfindung ist es vorgesehen, dass der zumindest eine Verarbeitungs-Parameter eine Information hinsichtlich eines Auslöse-Kriteriums für die Verarbeitung an der Edge-Vorrichtung umfasst, beispielsweise eine logische oder manuelle Auslöse-Bedingung, oder der Empfang einer auslösenden Nachricht, welche von der Edge-Vorrichtung durch eine entsprechende, mitumfasste Empfangsvorrichtung empfangen wird.

Dadurch wird erreicht, dass die zeitliche Ausführung der Verarbeitung an der Edge-Vorrichtung vorteilhaft angepasst werden kann und die Edge-Vorrichtung insgesamt effizienter arbeiten kann.

Eine Auslöse-Nachricht kann beispielsweise über das MQTT-Protokoll ("Message Queuing Telemetry Transport") oder ZeroMQ übermittelt werden.

MQTT ist ein offenes Netzwerkprotokoll für "Machine-to-Machine"-Kommunikation, welches die Übertragung von Telemetriedaten in Form von Nachrichten zwischen Geräten ermöglicht, trotz hoher Verzögerungen oder beschränkter Netzwerke.

ZeroMQ ist eine asynchrone Nachrichtenaustauschbibliothek für "high-throughput computing", die speziell auf Verteilte Systeme oder gleichzeitige Ausführung in verschiedenen Systemen entwickelt wurde. Es ist eine "Message Queue", benötigt aber im Gegensatz zu "Message Oriented Middleware" keinen dedizierten "Message Broker".

In einer Weiterbildung der Erfindung ist es vorgesehen, dass der zumindest eine Verarbeitungs-Parameter eine Information hinsichtlich einer Ressourcen-Bedingung für die Verarbeitung an der Edge-Vorrichtung umfasst, beispielsweise eine Prozessor-Art an der Edge-Vorrichtung wie eine GPU oder eine spezielle CPU, ein erforderlicher Speicher-Bedarf oder Speicher-Zugriff wie lokaler Speicher oder Cloud-Speicher.

Dadurch wird erreicht, dass die Ausführung der Verarbeitung an der Edge-Vorrichtung hinsichtlich der Ressourcen vorteilhaft angepasst werden kann und die Edge-Vorrichtung insgesamt effizienter arbeiten kann.

In einer Weiterbildung der Erfindung ist es vorgesehen, dass der zumindest eine Verarbeitungs-Parameter eine Information hinsichtlich einer Konfiguration für die Verarbeitung an der Edge-Vorrichtung umfasst, beispielsweise eine Kombination von KI-Code, Software und Ressourcen an der Edge-Vorrichtung.

Dadurch wird erreicht, dass die Ausführung der Verarbeitung an der Edge-Vorrichtung hinsichtlich der Konfiguration von Software und Hardware vorteilhaft angepasst werden kann und die Edge-Vorrichtung insgesamt effizienter arbeiten kann.

Durch eine entsprechende Kombination von zwei, drei, vier, fünf oder mehr Verbindungsparametern aus den Kategorien der vorhergehenden Verarbeitungsparameter können zudem synergistische Wirkungen auftreten, welche die Effizienz des Verfahrens und der Edge-Vorrichtung weiter steigern können.

Die erfindungsgemäße Aufgabe wird auch durch ein System zur automatisierten Verarbeitung von Verarbeitungs-Aufgaben auf Basis künstlicher Intelligenz oder maschinellem Lernen an einer Edge-Vorrichtung gelöst, umfassend eine Rechenvorrichtung mit einem Prozessor und einem Speicher und eine verbundene technische Vorrichtung oder Sensor-Vorrichtung, wobei das System dazu eingerichtet ist, das erfindungsgemäße Verfahren auszuführen.

In einer Weiterbildung der Erfindung ist es vorgesehen, dass die Rechenvorrichtung von der Edge-Vorrichtung umfasst ist.

Dadurch wird das System zur Ausführung des Verfahrens vereinfacht und die Komplexität reduziert.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die erfindungsgemäße Aufgabe wird auch durch eine computer-implementierte Datenstruktur zur automatisierten Verarbeitung von Verarbeitungs-Aufgaben auf Basis künstlicher Intelligenz oder maschinellem Lernen an einer Edge-Vorrichtung in Form einer Verarbeitungs-Vorlage zur Verwendung im erfindungsgemäßen Verfahren gelöst, umfassend Verarbeitungs-Daten, aufweisend Programmcodes, Modelle, Trainingsdaten und/oder Testdaten, und zugehörigen Ausführungs-Parametern, und zumindest einem Verarbeitungs-Parameter, welcher die Ausführung einer Menge von Verarbeitungs-Aufgaben durch eine Edge-Vorrichtung beschreibt.

In einer Weiterbildung der Erfindung ist es vorgesehen, dass die Datenstruktur zumindest ein, bevorzugt zumindest zwei oder drei, besonders bevorzugt zumindest vier oder fünf der nachfolgenden Parameter enthält:
- Daten zu Orchestrierung von Verarbeitungs-Vorlagen an der Edge-Vorrichtung,
- Artefakte bezüglich einer Verarbeitungs-Aufgabe,
- Meta-Daten zu Verarbeitungs-Daten,
- Angaben zum zeitlichen Verlauf einer Verarbeitungs-Aufgabe,
- Angaben zu Nachrichten zur Steuerung einer Verarbeitungs-Aufgabe
- Ressourcen der Edge-Vorrichtung,
- Angaben zu Ressourcen der Edge-Vorrichtung, und/oder der verbundenen technischen Vorrichtung, und/oder der Sensor-Vorrichtung
- Angaben zur Datenstruktur und/oder Datenqualität und/oder Anforderungen an die Integration der Modelle in Anwendungen und Diensten umfasst.
- Angaben zur Datenverarbeitung und/oder Training und/oder Validierung und/oder Bereitstellung in Anwendungen und Diensten.

Die Erfindung wird nachfolgend anhand eines in den beigeschlossenen Zeichnungen dargestellten Ausführungsbeispiels näher erläutert. In den Zeichnungen zeigt:
- Fig. 1: ein Beispiel für ein Flussdiagramm des erfindungsgemäßen Verfahrens,
- Fig. 2: ein erstes Ausführungsbeispiel für das erfindungsgemäße System,
- Fig. 3: ein zweites Ausführungsbeispiel für das erfindungsgemäße System.
- Fig. 4: ein Ausführungsbeispiel für eine Vorlage in Form eines Python-Programmcodes,
- Fig. 5: ein Beispiel für eine Vorlage zur Anwendung einer KI-/ML-Pipeline auf Sensor-Daten,
- Fig. 6: ein Ausführungsbeispiel für ein schematisches Ablaufdiagramm für das erfindungsgemäße Verfahren,
- Fig. 7: ein Ausführungsbeispiel für ein Blockschaltbild mit Abläufen für das erfindungsgemäße System und Verfahren,

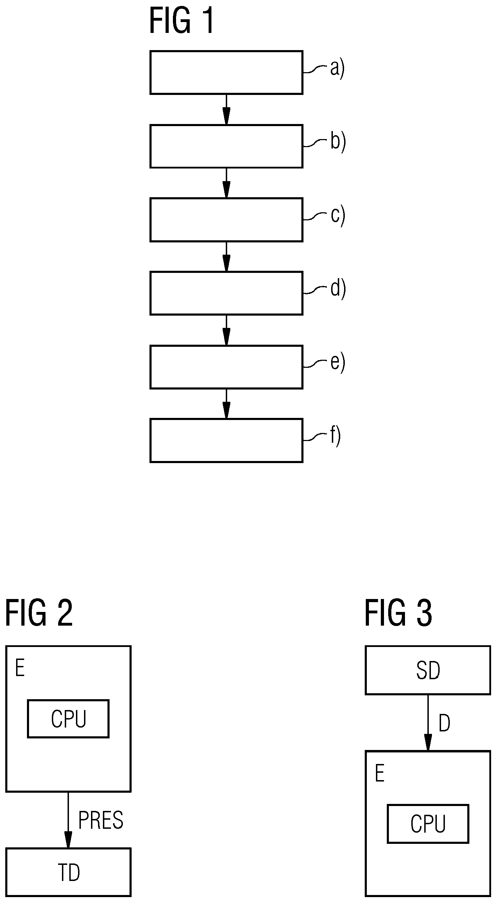

**Fig. 1** stellt ein Beispiel für ein Flussdiagramm des erfindungsgemäßen Verfahrens dar.

Das Verfahren dient zur automatisierten Verarbeitung von Verarbeitungs-Aufgaben auf Basis künstlicher Intelligenz an einer Edge-Vorrichtung E, welche mit einer Rechenvorrichtung CPU verbunden ist.

Das Verfahren ist in zumindest einem Schritt computerimplementiert.

Das Verfahren kann in zwei Varianten dargestellt werden.

In der ersten Form wird eine technische Vorrichtung TD, welche mit der Edge-Vorrichtung E verbundenen ist, mit ermittelten Verarbeitungs-Ergebnissen PR, durch die Edge-Vorrichtung E angesteuert.

Folgende Schritte werden dabei ausgeführt:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung CPU,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung E berücksichtigt, durch die Rechenvorrichtung CPU,
c) Erzeugen von jeweiligen Verarbeitungs-Vorlagen TP für eine jeweilige Verarbeitungs-Aufgabe, umfassend jeweilige Verarbeitungs-Daten und dem jeweiligen, zumindest einem Verarbeitungs-Parameter, durch die Rechenvorrichtung CPU,
d) Bereitstellen der Verarbeitungs-Vorlagen an die Edge-Vorrichtung E, durch die Rechenvorrichtung CPU,
e) Ausführen der Verarbeitungs-Vorlagen mithilfe der jeweiligen Verarbeitungs-Parameter durch die Edge-Vorrichtung E, und Erhalten von Verarbeitungs-Ergebnissen PR aus den Verarbeitungs-Vorlagen TP,
f) Ansteuern zumindest einer technischen Vorrichtung TD, welche mit der Edge-Vorrichtung E verbundenen ist, mit den Verarbeitungs-Ergebnissen PR, durch die Edge-Vorrichtung E.

In der zweiten Form werden Sensordaten durch eine Sensor-Vorrichtung SD, welche mit der Edge-Vorrichtung E verbundenen ist, erfasst und die Sensordaten werden an die Rechenvorrichtung CPU zur weiteren Verarbeitung bereitgestellt.

Folgende Schritte werden dabei ausgeführt:
a) Erfassen von Sensordaten D durch eine Sensor-Vorrichtung SD, welche mit der Edge-Vorrichtung E verbundenen ist, und Bereitstellen der Sensordaten an die Rechenvorrichtung CPU,
b) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung CPU,
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung E berücksichtigt, durch die Rechenvorrichtung CPU,
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung CPU,
e) Bereitstellen der Verarbeitungs-Vorlagen an die Edge-Vorrichtung E, durch die Rechenvorrichtung CPU,
f) Ausführen der Verarbeitungs-Vorlagen mithilfe der jeweiligen Verarbeitungs-Parameter PP durch die Edge-Vorrichtung E, und Erhalten von Verarbeitungs-Ergebnissen PR für die Sensordaten aus den Verarbeitungs-Vorlagen.

Im Verfahren wird eine Datenstruktur zur automatisierten Verarbeitung von Verarbeitungs-Aufgaben auf Basis künstlicher Intelligenz oder maschinellem Lernen an einer Edge-Vorrichtung E in Form der Verarbeitungs-Vorlage verwendet.

Die Datenstruktur ist computer-implementierte und umfasst Verarbeitungs-Daten, aufweisend Programmcodes, Modelle, Trainingsdaten und/oder Testdaten, und zugehörigen Ausführungs-Parametern und Verarbeitungs-Parameter.

Die Verarbeitungs-Vorlage kann beispielsweise folgende Daten in Form einer entsprechenden Datenstruktur umfassen:
- Daten zu Orchestrierung mehrerer Verarbeitungs-Vorlagen an der Edge-Vorrichtung E,
- Artefakte eine KI-/ML-Aufgabe betreffend, also bezüglich einer Verarbeitungs-Aufgabe,
- Angaben zu Daten, welche erzeugt werden, wie zum Ansteuern einer technischen Vorrichtung TD oder welche verarbeitet werden, wie Sensordaten D, also Meta-Daten zu Verarbeitungs-Daten,
- Angaben zum zeitlichen Verlauf einer Verarbeitungs-Aufgabe, wie Angaben zum Start oder zur Beendigung einer Instanz beziehungsweise Verarbeitungs-Aufgabe,
- Angaben zu Nachrichten zur Steuerung einer Instanz beziehungsweise Verarbeitungs-Aufgabe,
- Angaben zu Ressourcen der Edge-Vorrichtung E,
- Angaben zu Ressourcen der Edge-Vorrichtung E, und/oder der verbundenen technischen Vorrichtung TD, und/oder der Sensor-Vorrichtung SD,
- Angaben zur Datenstruktur und/oder Datenqualität und/oder Anforderungen an die Integration der Modelle in Anwendungen und Diensten,
- Angaben zur Datenverarbeitung und/oder Training und/oder Validierung und/oder Bereitstellung in Anwendungen und Diensten.

Die Datenstruktur kann zumindest einen, bevorzugt zumindest zwei oder drei, besonders bevorzugt zumindest vier oder fünf der Parameter enthalten.

Außerdem kann die Verarbeitungs-Vorlage Optimierungen für eine Ausführung durch die Edge-Vorrichtung E vorsehen:
- Eine Kennung für eine Verarbeitungs-Vorlage kann verwendet werden, um der Edge-Vorrichtung E eine einfache Identifizierung und Zuweisung zu ermöglichen.
- Eine Markierung (engl. "flag") kann verwendet werden, um der Edge-Vorrichtung E eine einfache Zuweisung zu einem speziellen Prozessor, wie einer GPU zu ermöglichen.
- Eine Start-Zeit kann verwendet werden, um der Edge-Vorrichtung E eine einfache Zuweisung zur Verarbeitung an einer vorbestimmten Zeit zu erlauben. Dies kann auch in Form einer "frühestmöglichen" Start-Zeit" erfolgen.
- Eine End-Zeit kann verwendet werden, um der Edge-Vorrichtung E eine einfache Zuweisung zur Verarbeitung an einer vorbestimmten Zeit zu erlauben, um eine rechtzeitige Erledigung zur gewünschten End-Zeit sicherzustellen.
- Eine Zeitspanne (engl. "slack") kann vorgesehen werden, um der Edge-Vorrichtung E eine flexible Planung einer Verarbeitung zweier verbundener, aufeinander folgender Verarbeitungs-Vorlagen zu erlauben, wobei beide Verarbeitungs-Vorlagen einen gemeinsamen Zugriff auf Ressourcen benötigen, und entsprechende Optimierungs-Strategien zur Auflösung von derartigen Konflikten angewandt werden können.
- Eine Konflikt-Angabe kann beispielsweise eine Konflikt-Matrix umfassen, durch welche das Verhalten in einem Zugriffs-Konflikt auf eine gemeinsame Ressource beispielsweise durch Einsatz von Prioritäten oder Optimierungs-Strategien zur Auflösung von Konflikten definiert sind.
- eine Information hinsichtlich einer Datenstruktur bei der Erzeugung des Modells und/oder einer Datenqualität bei der Erzeugung des Modells und/oder einer Anforderung an die Integration eines oder mehrerer Modelle in Anwendungen und Diensten.
- eine Information hinsichtlich des Trainings und/oder Validierung und/oder Bereitstellung in Anwendungen und Diensten.

Für Optimierungen kann an der Edge-Vorrichtung E beispielsweise ein Verfahren nach der Methode der allgemeinen reduzierten Gradienten (engl. "Generalized Reduced Gradient", kurz GRG) angewandt werden.

Das GRG-Verfahren ist eine Erweiterung der Methode mit reduziertem Gradienten, um nichtlineare Ungleichheitsbedingungen zu berücksichtigen. Bei diesem Verfahren wird eine Suchrichtung gefunden, so dass für jede kleine Bewegung die aktuellen aktiven Beschränkungen genau aktiv bleiben.

Andere Optimierungs-Verfahren sind ebenso möglich, wie beispielsweise der Evolutions-Algorithmus, welcher ein generischer populationsbasierter metaheuristischer Optimierungs-Algorithmus ist.

**Fig. 2** zeigt ein erstes Ausführungsbeispiel für das erfindungsgemäße System nach Anspruch 1, wobei die technische Vorrichtung TD, welche mit der Edge-Vorrichtung E verbunden ist, durch die Edge-Vorrichtung E mit den Verarbeitungs-Ergebnissen PRES angesteuert wird.

Die Rechenvorrichtung CPU kann von der Edge-Vorrichtung E umfasst sein.

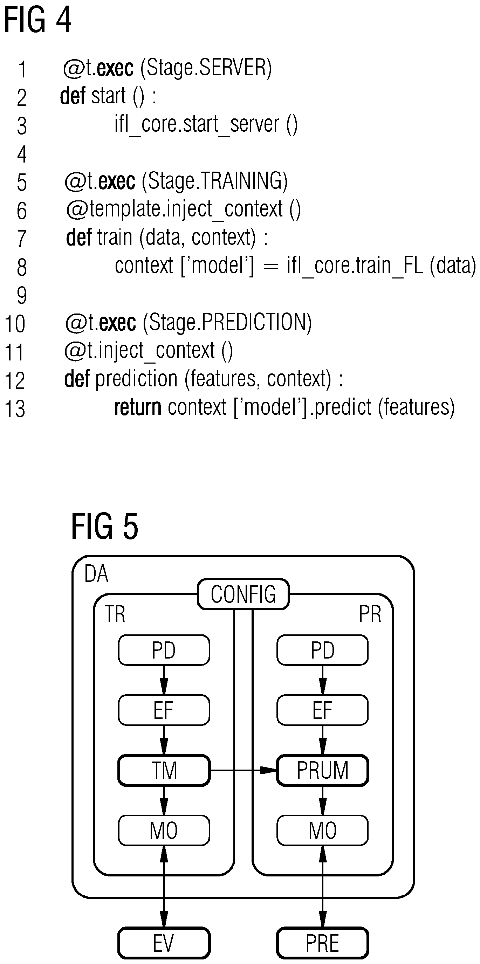

Es gelten auch die Ausführungen zur Fig. 5.

**Fig. 3** zeigt ein zweites Ausführungsbeispiel für das erfindungsgemäße System nach Anspruch 2, wobei Sensordaten D durch die Sensor-Vorrichtung SD, welche mit der Edge-Vorrichtung E verbundenen ist, erfasst werden und die Sensordaten D an die Rechenvorrichtung CPU bereitgestellt werden.

Die Rechenvorrichtung CPU kann von der Edge-Vorrichtung E umfasst sein.

Es gelten auch die Ausführungen zur Fig. 5.

**Fig. 4** stellt ein Ausführungsbeispiel für eine IFL-Vorlage (engl. "industrial federated learning", kurz IFL) in Form eines Python-Programmcodes für eine Klienten-Server-Umgebung dar.

Die Anpassbarkeit von FL-Lösungen mit verteilten Klienten und ihren jeweiligen Kontexten, wie Klienten-Daten, kann durch die Verwendung von Vorlagen verbessert werden.

Im dargestellten Beispiel wird der Dekorierer t.exec definiert, um für Ausführungsvorrichtungen, das heißt Runtime-Module von Server und Klienten entsprechende Funktionen auszuführen.

Die Server-Stufe ist in den Zeilen 1-3 implementiert, welche FL-Services ausführt, die durch einen IFL-Kern bereitgestellt werden.

Die Trainings-Stufe ist in den Zeilen 5-8 implementiert, welche an Klienten lokal ausgeführt werden. Dabei werden lokale Daten zu der zu verwendeten Funktion in den FL-Trainings-Runden in Zeile 8. Der Kontext des Klienten kann verwendet werden, um lokale Konfigurationen miteinzubeziehen, sowie beispielsweise Modelle abzuspeichern, welche in einer Prädiktion angewendet werden sollen, siehe Zeilen 10-13.

Darauf aufbauend können nun Datenwissenschaftler beispielsweise eine Vorlage unter Beachtung von Klienten-Kontext und Post-Processing-Verhalten verbessern.

Die Vorlage kann dann gepackt und zu einem Server für eine skalierbare Verwendung in mehreren Anwendungen hochgeladen werden.

**Fig. 5** zeigt ein Beispiel für eine Vorlage zur Anwendung einer KI-/ML-Pipeline auf Sensor-Daten nach dem Beispiel in der vorhergehenden Figur.

Die Vorlage (engl. "template") ist ein verteilbares Artefakt DA (engl. "deployable artefact") und umfasst Programmcode zur Anwendung einer KI-/ML-Pipeline auf Sensor-Daten.

Es sind in der Figur zwei Datenflüsse dargestellt, nämlich einmal für eine Training-Phase TR und einmal für eine Vorhersage-Phase PR, welche eine Konfiguration CONFIG anwenden.

Die grau hinterlegten Schritte werden für das Training TR und die Vorhersage PR verwendet.

Beide Datenflüsse Parsen jeweils zunächst Daten PD, extrahieren Merkmale jeweils im Schritt ED (engl. "extract features") und geben jeweils ein Modell im Schritt MO aus (engl. "model output").

Im Modell-Training TM werden Daten für eine Prädiktion erzeugt, und im Schritt PRUM (engl. "predict using model", kurz PRUM) wird die Prädiktion mithilfe KI-/ML-Methoden unter Verwendung des Modells berechnet.

Es erfolgt eine Evaluierung EV oder Auswertung (engl. "evaluation", kurz EV) des Trainings-Modells beziehungsweise eine Vorhersage PRE mithilfe des Prädiktions-Modells.

Die erzeugte Vorlage dient auch als Basis für eine Ausführung an einem Klienten.

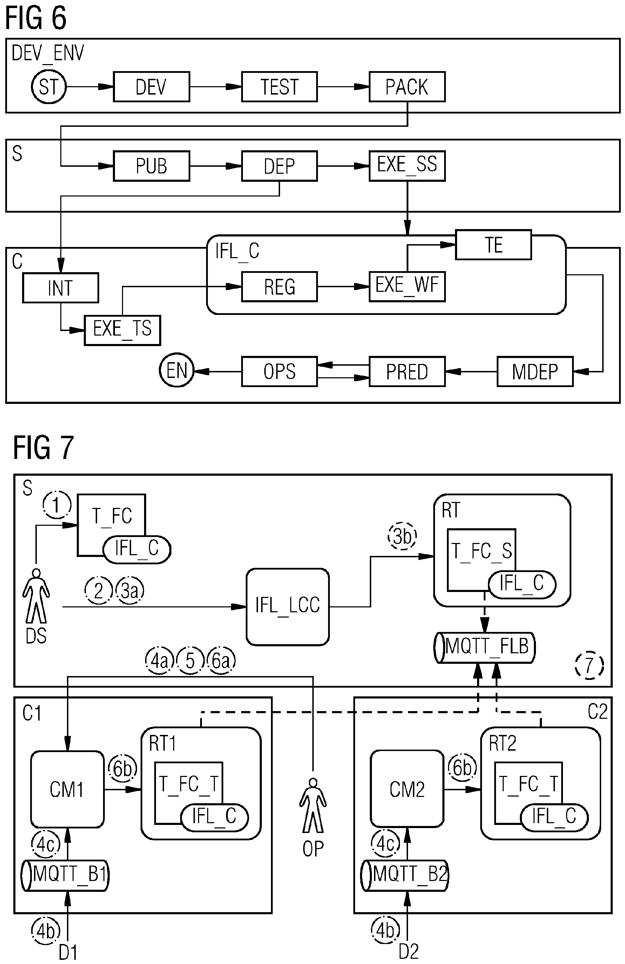

**Fig. 6** zeigt ein Ausführungsbeispiel für ein schematisches Ablaufdiagramm für das erfindungsgemäße Verfahren, bei welchem ein IFL-Lifecycle-Verfahren abgebildet ist.

Der IFL-Template-Lebenszyklus für einen End-to-End-Support für IFL-Templates stellt die Entwicklung bis zum kontinuierlichen Betrieb dar.

Im Detail umfasst der Template-Lebenszyklus die Entwicklung, das Testen und das Verpacken von Templates in der Entwicklungsumgebung eines Datenwissenschaftlers.

Diese Phasen werden durch ein Template-Framework unterstützt, das Funktions-Dekoratoren umfasst, sowie ein Template-Runtime-Modul zum Ausführen entwickelter Vorlagen, das heißt Templates, auf einer Ausführungsvorrichtung.

Der nächste Schritt besteht darin, die gepackte Vorlage auf einem Server zu veröffentlichen, wie per Datei-Upload, der dann ausgelöst wird, um eine Vorlageninstanz in einer auf dem Server gehosteten Vorlagenlaufzeit bereitzustellen.

Dieser Server führt die Serverphase aus und nutzt daher den IFL-Kern.

Um die entsprechende Client-Phase auszuführen, könnte der Server die Vorlage entweder für Ausführungsvorrichtungen beziehungsweise Runtime-Module von Klienten bereitstellen, die mit dem Server verbunden sind (engl. "push"), oder Klienten können die Vorlage bei Bedarf herunterladen (engl "pull").

Damit kann die Steuerung der FL-Beteiligung über den Push-Ansatz zentralisiert werden, oder die Teilnahme kann von den dezentralen Klienten über den Pull-Ansatz ausgewählt werden.

Der Push-Ansatz kann verwendet werden, um ein globales Modell mit Daten zu trainieren, auf die beispielsweise von einem Datenwissenschaftler, der auf der Serverseite arbeitet, nicht zugegriffen werden kann.

Im Gegensatz dazu eignet sich der Pull-Ansatz eher für Datenwissenschaftler oder Bediener (engl. "operators"), die auf der Edge-Client-Seite arbeiten und explizit FlaaS (engl. "federated learning as a service", kurt FLaaS) konsumieren wollen.

Um die Erweiterbarkeit skalierbarer Edge-basierter Clientanwendungen mithilfe von FL zu verbessern, wird ein Integrationsschritt berücksichtigt.

Dazu verbraucht die Anwendung Modelle von FL-Vorlagen, nachdem sie die Trainingsphase mit der Clientlaufzeit ausgeführt hat.

Da laufend neue Vorlagen hinzugefügt und bestehende mit neuen Deployments aktualisiert werden können, wird die Anwendung kontinuierlich aktualisiert, z.B. mit Modelltraining oder Pre- und Post-Processing-Logik.

Schließlich führt die Vorlagenausführung zu neuen Modellbereitstellungen, die in kontinuierlich ausgeführten Vorhersagen verwendet werden können, um dem Klienten (also der Anwendung) während des Betriebs Ergebnisse zu liefern Konkret laufen die Verfahrensschritte in einer Entwicklungsumgebung DEV_ENV (engl. "development environment"), auf einer Server S und einem oder mehreren Klienten K ab.

Nach dem Start ST läuft die Entwicklung DEV, das Testen TEST und das Verpacken PACK (engl. "packaging") innerhalb der Entwicklungsumgebung DEV_ENV ab

Es erfolgt am Server S das Publizieren PUB, die Verteilung DEP (engl. "deployment") und das Ausführen am Server EXE_SS (engl. "execute at server stage").

Das Ausführen am Server EXE_SS startet den Server mit dem IFL-Kern IFL_C.

Die Verteilung erfolgt zu Klienten C zur Integration INT, welche am Klienten zum Training im Schritt EXE_TS ausgeführt wird und das Ergebnis im Schritt REG innerhalb des Kerns des Industriellen föderiertes Lernens IFL_C registriert wird, welche IFL-Kern Workflows IFL_WF (engl. "execute workflow") ausführt und Trainings-Erweiterungen TE anlegt, welche am Server gespeichert werden können.

Der IFL-Kern IFL_C liefert Eingangsdaten für ein Modell-Verteilen MDEP (engl. "model deployment"), welches wiederum eine Vorhersage oder Prädiktion PRED speist.

Ein laufender Betrieb OPS (engl. "operation") liefert Rückmeldungen zu Prädiktion PRED, bis dieser im Schritt EN endet.

**Fig. 7** stellt ein Ausführungsbeispiel für ein Blockschaltbild mit Abläufen für das erfindungsgemäße System und Verfahren dar.

Dabei ist eine Betriebsüberwachungs-Anzeige IFL_LCC mithilfe von Betriebsüberwachungs-Anwendungen CM1, CM2 implementiert, welche FL-trainierte Modelle auf IoT Sensordaten D1, D2 anwendet.

Beispielsweise kann der IFL-Vorlagenlebenszyklus integriert werden, um FL (d.h. FedClust) für IoT-Daten zu erleichtern, wie durch eine IIoT-basierte Anwendung für Betriebszustands-Überwachungen CM1 und CM1.

Es ist eine Aufgabe von Betriebszustands-Überwachungen CM1, CM2, mithilfe des IFL-Kerns Vorlagen der Templates zu aufgenommenen Sensordaten D1, D2 (d.h. Cluster-Pumpenbedingungen) auf jedem Klienten C1, C2 auszuführen.

Das CM-System CM1, CM2 stellt ein "IFL-Lifecycle-Cockpit" zur Verfügung, um Vorlagen zu veröffentlichen und an eine Flotte von Klienten-Geräten zu verteilen.

Die Klienten-Geräte C1, C2 hosten eine entsprechende CM-App zum Sammeln von Sensordaten D1, D2, zum Erstellen von Datensätzen und zum Starten des Trainings über ein jeweiliges Runtime-Modul, um schließlich das resultierende Modell für die kontinuierliche Vorhersage von Bedingungen auf Basis von Streaming-Daten zu nutzen.

Es sind nun Schritt 1-7 vorgesehen, um den IFL-Vorlagenlebenszyklus zu integrieren.

Im Schritt 1 wird durch einen Datenwissenschaftler DS ein FedClust-Template T_FC entwickelt, indem wir den Algorithmus aus Fig. 1 aufrufen, wie er vom IFL-Kern IFL_C bereitgestellt wird.

Um FedClust mehreren Klienten C1, C2 zur Verfügung zu stellen, wird die Vorlage in Schritt 2 per Datei-Upload in der Betriebsüberwachungs-Anzeige (engl. "IFL lifecycle cockpit"), der IFL-Lifecycle Cockpit-Webanwendung IFL_LCC veröffentlicht.

Zum Ausführen der Serverphase, welche die Zeilen 11 bis 15 im Algorithmus der Fig. 1 verwendet, wird die Vorlagenbereitstellung in Schritt 3a gestartet.

Dies führt dazu, dass das IFL Lifecycle Cockpit IFL_LCC die entsprechende Vorlage T_FC_S in Schritt 3b dem Runtime-Modul RT auf dem Server S bereitstellt.

Ein FL-MQTT-Client-Broker MQTT_FLB nach dem "Message Queuing Telemetry Transport"-Protokoll, kurz MQTT, kommuniziert die Vorlagen zwischen Server S und den Klienten C1, C2.

Dementsprechend können die Verarbeitungs-Vorlagen mithilfe des Message Queuing Telemetry Transport Protokolls vom Server an Klienten übertragen werden.

Ein Bediener OP des lokalen Betriebsüberwachungs-Prozesses führt den Schritt 4a mit dem "onboarding" von Sensor-Vorrichtungen beziehungsweise Sensoren SD (siehe Fig. 7; MQTT-Thema für "upstreaming"-Sensordaten D1, D2 definieren) und dem Zuordnen den Datenstrom einer logischen Entität, nämlich einem Asset, zu, das beispielsweise eine Pumpe repräsentiert.

Bei der Ausführung der Szenarien wird die Aufnahme von Sensordaten D1 beziehungsweise D2 durch die entsprechende Sensoren SD an die jeweiligen MQTT-Client-Broker MTBB_B1, MQTT_B2 im Schritt 4b gestartet, wobei ein Python-Skript verwendet wird, das die Daten stromaufwärts von Pumpen simuliert.

Dies ist relevant, damit die CM-Anwendung CM1, CM2 einen Datensatz für das Training erfassen kann, welcher im Schritt 4c bereitgestellt wird.

Um Clustering auf die Daten anzuwenden, wie im Klienten-Teil der Vorlage definiert (Aufrufen der Zeilen 1-9 des Algorithmus nach Fig. 1), wird ein Vorlagendownload auf das Klienten-Gerät in Schritt 5 initiiert und das Training in Schritt 6a gestartet.

Dies löst die jeweilige CM-App CM1, CM2 aus, um den Datensatz als Vorlage T_FC_T für föderierte Gruppenbildung am Klienten für Training für das zugehörige Runtime-Modul RT1, RT2 im Schritt 6b bereitzustellen und die Vorlagenausführung zu starten.

Abschließend wird im Schritt 7 der FedClust-Wissensaustausch durch Föderieren zwischen den Klienten durchgeführt.

Die resultierenden globalen Modelle werden an die beteiligten Klienten-CM-App-Deployments zurückgegeben.

Eine Validierung wird in der Vorlage durchgeführt und die jeweilige CM-App CM1, CM2 speichert resultierende Reinheits-Metriken.

### Bezugszeichenliste:

- 1-7: Verfahrensschritte
- C, C1, C2: Klient
- CM1, CM2: Betriebsüberwachungs-Anwendung (engl. "condition monitoring application")
- CONFIG: Konfiguration
- D, D1, D2: Sensor-Daten
- DA: Verteilbares Artefakt (engl. "deployable artefact")
- DEP: Verteilen (engl. "deployment")
- DEV: Entwicklung
- DEV_ENV: Entwicklungsumgebung (engl. "development environment")
- DS: Datenwissenschaftler (engl. "data scientist")
- E: Edge-Vorrichtung
- EF: Merkmals-Extraktion (engl. "extract features")
- EN: Ende
- EV: Auswertung (engl. "evaluation")
- EXE_SS: Ausführen am Server (engl. "execute at server stage")
- EXE_TS: Ausführen am Klienten für Training (engl. "execute at training stage")
- EXEC_WF: Ausführen am IFLC (engl. "execute work-flows at IFL core")
- IFL_C: Kern vom Industrielles föderiertes Lernen
- IFL_LCC: Betriebsüberwachungs-Anzeige (engl. "IFL lifecycle cockpit")
- INT: Integration
- MDEP: Modell-Verteilen (engl. "model deployment")
- MO: Modell-Ausgabe (engl. "model output")
- MQTT_FLB, MQTT_B1, MQTT_B2: Nachrichten-Vermittler (engl. "broker")
- OP: Bediener (engl. "operator")
- OPS: Betrieb (engl. "operation")
- PACK: Verpacken (engl. "packaging")
- PD: Parsen von Daten
- PR, PRED: Vorhersage (engl. "prediction")
- PRES: Verarbeitungs-Ergebnis
- PRUM: Vorhersage mithilde des Modells (engl. "predict using model")
- PUB: Publizieren
- REG: Registrieren
- RT, RT1, RT2: Ausführungsvorrichtung, Runtime-Modul (engl. "runtime")
- S: Server
- SD: Sensor-Vorrichtung
- ST: Start
- T_FC: Vorlage föderierte Gruppenbildung (engl. "template federated clustering"
- T_FC_S: Vorlage föderierte Gruppenbildung am Server
- T_FC_T: Vorlage föderierte Gruppenbildung am Klienten für Training
- TD: technisches Gerät
- TE: Trainings-Erweiterungen (engl. "trainer extensions")
- TEST: Testen
- TM: Modell-Training (engl. "train model")
- TR: Training

## Patentansprüche

1. Computer-implementiertes Verfahren zur automatisierten Verarbeitung von Verarbeitungs-Aufgaben auf Basis künstlicher Intelligenz oder maschinellem Lernen an einer Edge-Vorrichtung (E), welche mit einer Rechenvorrichtung (CPU) verbunden ist, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Aufgaben an der Edge-Vorrichtung beschreiben, an die Rechenvorrichtung (CPU),
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung (E) berücksichtigt, durch die Rechenvorrichtung (CPU),
c) Erzeugen von jeweiligen Verarbeitungs-Vorlagen für eine jeweilige Verarbeitungs-Aufgabe, umfassend jeweilige Verarbeitungs-Daten und dem jeweiligen, zumindest einem Verarbeitungs-Parameter, durch die Rechenvorrichtung (CPU),
d) Bereitstellen der Verarbeitungs-Vorlagen an die Edge-Vorrichtung (E), durch die Rechenvorrichtung (CPU),
e) Ausführen der Verarbeitungs-Vorlagen mithilfe der jeweiligen Verarbeitungs-Parameter durch die Edge-Vorrichtung (E), und Erhalten von Verarbeitungs-Ergebnissen aus den Verarbeitungs-Vorlagen,
f) Ansteuern zumindest einer technischen Vorrichtung (TD), welche mit der Edge-Vorrichtung (E) verbundenen ist, mit den Verarbeitungs-Ergebnissen, durch die Edge-Vorrichtung (E).

2. Computer-implementiertes Verfahren zur automatisierten Verarbeitung von Verarbeitungs-Aufgaben auf Basis künstlicher Intelligenz oder maschinellem Lernen an einer Edge-Vorrichtung (E), welche mit einer Rechenvorrichtung (CPU) verbunden ist, wobei folgende Schritte verarbeitet werden:
a) Erfassen von Sensordaten durch eine Sensor-Vorrichtung (SD), welche mit der Edge-Vorrichtung (E) verbundenen ist, und Bereitstellen der Sensordaten an die Rechenvorrichtung (CPU),
b) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung (CPU),
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung (E) berücksichtigt, durch die Rechenvorrichtung (CPU),
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung (CPU),
e) Bereitstellen der Verarbeitungs-Vorlagen an die Edge-Vorrichtung (E), durch die Rechenvorrichtung (CPU),
f) Ausführen der Verarbeitungs-Vorlagen mithilfe der jeweiligen Verarbeitungs-Parameter durch die Edge-Vorrichtung (E), und Erhalten von Verarbeitungs-Ergebnissen (PR) für die Sensordaten aus den Verarbeitungs-Vorlagen (TP).

3. Verfahren nach einem der vorhergehenden Ansprüche, wobei die Rechenvorrichtung (CPU) an einer Edge-Vorrichtung eines Klienten eines Klienten-Server-Systems gelegen ist.

4. Verfahren nach einem der vorhergehenden Ansprüche, wobei die Verarbeitungs-Vorlagen mithilfe eines Message Queuing Telemetry Transport Protokolls vom Server an Klienten übertragen werden.

5. Verfahren nach einem der vorhergehenden Ansprüche, wobei der zumindest eine Verarbeitungs-Parameter zumindest eine Information hinsichtlich einer Datenstruktur bei der Erzeugung des Modells und/oder einer Datenqualität bei der Erzeugung des Modells und/oder einer Anforderung an die Integration eines oder mehrerer Modell in eine Anwendung und einen Dienst umfasst.

6. Verfahren nach einem der vorhergehenden Ansprüche, wobei der zumindest eine Verarbeitungs-Parameter zumindest eine Information hinsichtlich Training und/oder Validierung und/oder Bereitstellung in Anwendungen und Diensten umfasst.

7. Verfahren nach einem der vorhergehenden Ansprüche, wobei der zumindest eine Verarbeitungs-Parameter zumindest eine zeitliche Information umfasst, beispielsweise eine Verarbeitungs-Priorität, eine vorbestimmte Start-Zeit oder End-Zeit für die Verarbeitung, ein Verarbeitungs-Zeitbereich oder eine Verarbeitungs-Wiederholung.

8. Verfahren nach einem der vorhergehenden Ansprüche, wobei der zumindest eine Verarbeitungs-Parameter zumindest eine Information hinsichtlich eines Auslöse-Kriteriums für die Verarbeitung an der Edge-Vorrichtung (E) umfasst, beispielsweise eine logische oder manuelle Auslöse-Bedingung, oder der Empfang einer auslösenden Nachricht, welche von der Edge-Vorrichtung (E) durch eine entsprechende, mitumfasste Empfangsvorrichtung empfangen wird.

9. Verfahren nach einem der vorhergehenden Ansprüche, wobei der zumindest eine Verarbeitungs-Parameter zumindest eine Information hinsichtlich einer Ressourcen-Bedingung für die Verarbeitung an der Edge-Vorrichtung (E) umfasst, beispielsweise eine Prozessor-Art an der Edge-Vorrichtung (E) wie eine GPU oder eine spezielle CPU, ein erforderlicher Speicher-Bedarf oder Speicher-Zugriff wie lokaler Speicher oder Cloud-Speicher.

10. Verfahren nach einem der vorhergehenden Ansprüche, wobei der zumindest eine Verarbeitungs-Parameter eine Information hinsichtlich einer Konfiguration für die Verarbeitung an der Edge-Vorrichtung (E) umfasst, beispielsweise eine Kombination von Verarbeitungs-Daten, Software und Ressourcen an der Edge-Vorrichtung (E).

11. System zur automatisierten Verarbeitung von Verarbeitungs-Aufgaben auf Basis künstlicher Intelligenz an einer Edge-Vorrichtung (E), umfassend eine Rechenvorrichtung (CPU) mit einem Prozessor und einem Speicher und eine verbundene technische Vorrichtung (TD) oder Sensor-Vorrichtung (SD), wobei das System dazu eingerichtet ist, das Verfahren nach einem der Ansprüche 1 oder 3 bis 7 auszuführen.

12. System zur automatisierten Verarbeitung von Verarbeitungs-Aufgaben auf Basis künstlicher Intelligenz oder maschinellem Lernen an einer Edge-Vorrichtung (E), umfassend eine Rechenvorrichtung mit einem Prozessor und einem Speicher und eine verbundene Sensor-Vorrichtung (SD), wobei das System dazu eingerichtet ist, das Verfahren nach einem der Ansprüche 2 bis 7 auszuführen.

13. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 7 auszuführen.

14. Computer-implementierte Datenstruktur zur automatisierten Verarbeitung von Verarbeitungs-Aufgaben auf Basis künstlicher Intelligenz oder maschinellem Lernen an einer Edge-Vorrichtung (E) in Form einer Verarbeitungs-Vorlage zur Verwendung im Verfahren nach einen der Ansprüche 1 bis 7, umfassend Verarbeitungs-Daten, aufweisend Programmcodes, Modelle, Trainingsdaten und/oder Testdaten, und zugehörigen Ausführungs-Parametern, und zumindest einem VerarbeitungsParameter, welcher die Ausführung einer Menge von Verarbeitungs-Aufgaben durch eine Edge-Vorrichtung (E) beschreibt.

15. Datenstruktur nach dem vorhergehenden Anspruch, wobei zumindest ein, bevorzugt zumindest zwei oder drei, besonders bevorzugt zumindest vier oder fünf der nachfolgenden Parameter enthalten sind:
- Daten zu Orchestrierung von Verarbeitungs-Vorlagen an der Edge-Vorrichtung (E),
- Artefakte bezüglich einer Verarbeitungs-Aufgabe,
- Meta-Daten zu Verarbeitungs-Daten,
- Angaben zum zeitlichen Verlauf einer Verarbeitungs-Aufgabe,
- Angaben zu Nachrichten zur Steuerung einer Verarbeitungs-Aufgabe,
- Angaben zu Ressourcen der Edge-Vorrichtung (E), und/oder der verbundenen technischen Vorrichtung (TD), und/oder der Sensor-Vorrichtung (SD)
- Angaben zur Datenstruktur und/oder Datenqualität und/oder Anforderungen an die Integration der Modelle in Anwendungen und Diensten,
- Angaben zur Datenverarbeitung und/oder Training und/oder Validierung und/oder Bereitstellung in Anwendungen und Diensten.
